# EUROPEAN PATENT APPLICATION

(11) **EP 2 530 454 A1**
(43) Date of publication of application: **05.12.2012**
(21) Application number: 11737113.8
(22) Date of filing: 27.01.2011
(51) Int. Cl.: G01N 21/49

(54) **ANALYSIS DEVICE**

(30) Priority: 29.01.2010 JP 2010017668
(71) Applicant: Hitachi High-Technologies Corporation, Tokyo 105-8717 (JP)
(72) Inventor: INABE Toshiyuki, Hitachinaka-shi Ibaraki 312-8504 (JP); MAKINO Akihisa, Hitachinaka-shi Ibaraki 312-8504 (JP); ADACHI Sakuichiro, Kokubunji-shi Tokyo 185-8601 (JP)
(74) Representative: Buchetmann, Dominik
(86) International application number: PCT/JP2011/051651
(87) International publication number: WO 2011/093402

(57) **Abstract**

An analysis device using scattering light is provided capable of, when a foreign substance such as a bubble is mixed in a measurement target or is attached in a reaction container, reducing the influence by the foreign substance while improving the S/N ratio characteristics. Two or more detectors are disposed on a plane orthogonal to an optical axis of light applied to the measurement target and on a circumference around the optical axis. A change in outputs from the detectors is observed, and a detector influenced by noise due to a foreign substance such as a bubble is specified for rejection, and outputs from the detectors are averaged.

## Description

### TECHNICAL FIELD

The present invention relates to an analysis device configured to irradiate a measurement target with light and measure scattering light from the measurement target.

### BACKGROUND ART

Patent Document 1 discloses, as a device configured to irradiate a measurement target with light and measure scattering light therefrom, a technique relating to scattering light measurement from an antigen-antibody sample in an immune response test, for example. In this immune response test, the measurement target is irradiated with light and scattering light therefrom is found, whereby time and measurement sensitivity of the immune response or the like are analyzed.
Patent Document 1: JP Patent Publication (Kokai) No. 60-40937 A (1985)

### DISCLOSURE OF THE INVENTION

### PROBLEM TO BE SOLVED BY THE INVENTION

A foreign substance such as a bubble mixed in a measurement target of an analysis device using scattering light or attached in a reaction container may be detected as noise and so influence a measurement result. In order to reduce such an influence by noise, there is a method to integrate the outputs from a detector in a given time to improve the S/N ratio characteristics. The time for integration, however, is limited by a temporal change of the measurement target, and additionally when a foreign substance such as a bubble is attached in a reaction container, the improvement effect for the S/N ratio characteristics cannot be expected.

As another method, scattering light may be detected using a plurality of detectors, and outputs therefrom may be averaged or a difference therebetween may be found so as to improve the S/N ratio. However, since a foreign substance such as a bubble behaves randomly, the S/N ratio characteristics may become worse.

It is an object of the invention to provide an analysis device using scattering light capable of, when a foreign substance such as a bubble is mixed in a measurement target or is attached in a reaction container, reducing an influence by the foreign substance while improving the S/N ratio characteristics.

### MEANS FOR SOLVING THE PROBLEM

An analysis device of the present invention is configured to measure, with a detector, scattering light scattered from a measurement target irradiated with light. At least two detectors are disposed on a plane orthogonal to an optical axis of the light applied to the measurement target and on a circumference around the optical axis.

More specifically, an analysis device of the present invention includes: a reaction container storing a measurement target body; a light source part from which light is applied to the reaction container; a detector to measure scattering intensity of light scattered at the measurement target body; a detection circuit part to measure an output from the detector; an operation part to process an output from the detection circuit part and a recording part to store an output from the detection circuit part. Two or more detectors are disposed on a plane orthogonal to an optical axis of light applied from the light source part to the reaction container and on a circumference around the optical axis.

In the thus configured analysis device, outputs from all detectors disposed on the circumference are amplified by the detection circuit parts corresponding to the detectors. The amplified detection signals are input to the operation part to measure and analyze a change thereof, and are stored at the recording part at constant intervals.

When the operation part detects a sudden change of the output from a detector, then the output from the corresponding detector is rejected and removed from the measurement result. Then after the measurement ends, among the measurement results stored in the recording part, the outputs from the detectors other than the removed detector are averaged to calculate a measurement result.

### EFFECTS OF THE INVENTION

According to the present invention, an analysis device using scattering light can be provided, capable of, when a foreign substance such as a bubble is mixed in a measurement target or is attached in a reaction container, reducing the influence by the foreign substance while improving the S/N characteristics.

### BRIEF DESCRIPTION OF THE DRAWINGS

Fig. 1 schematically illustrates a part of an analysis device relating to Embodiment 1 of the present invention.
Fig. 2 schematically illustrates an exemplary output signal from detection circuits of Fig. 1 relating to Embodiment 1 of the present invention.
Fig. 3 schematically illustrates a part of an analysis device including a plurality of detectors disposed at different angles relating to an embodiment as a comparison with Embodiment 1 of the present invention.
Fig. 4 schematically illustrates an exemplary output signal from detection circuits of Fig. 3 relating to an embodiment as a comparison with Embodiment 1 of the present invention.
Fig. 5 is an operation flowchart of an analysis device relating to Embodiment 1 of the present invention.
Fig. 6 schematically illustrates a detection circuit part relating to Embodiment 2 of the present invention.
Fig. 7 is a flowchart of exemplary calculation of a correction coefficient relating to Embodiment 2 of the present invention.
Fig. 8 illustrates actually measured data illustrating an example where light amount data behaves differently when 20° scattering light at two positions are measured simultaneously, relating to Embodiment 1 of the present invention.

### MODE FOR CARRYING OUT THE INVENTION

The following describes embodiments of the present invention by way of Embodiments 1 and 2.

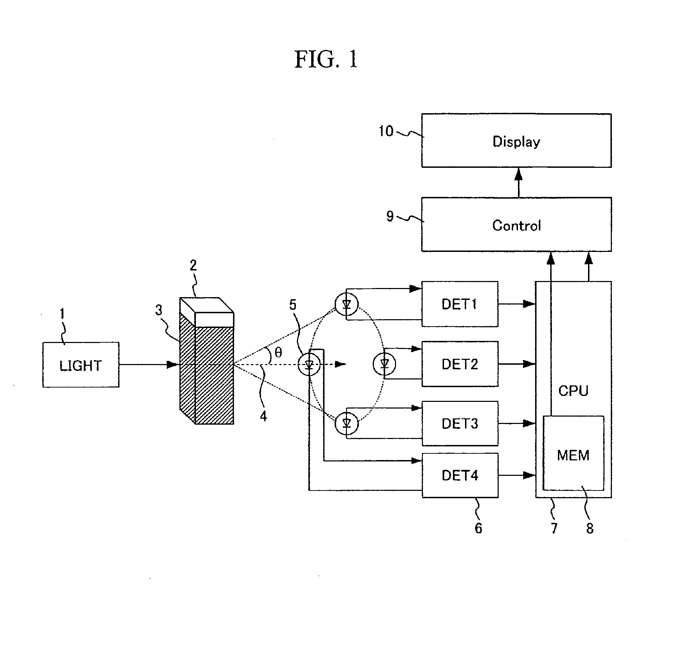

Referring to Fig. 1 to Fig. 5, Embodiment 1 is described below.

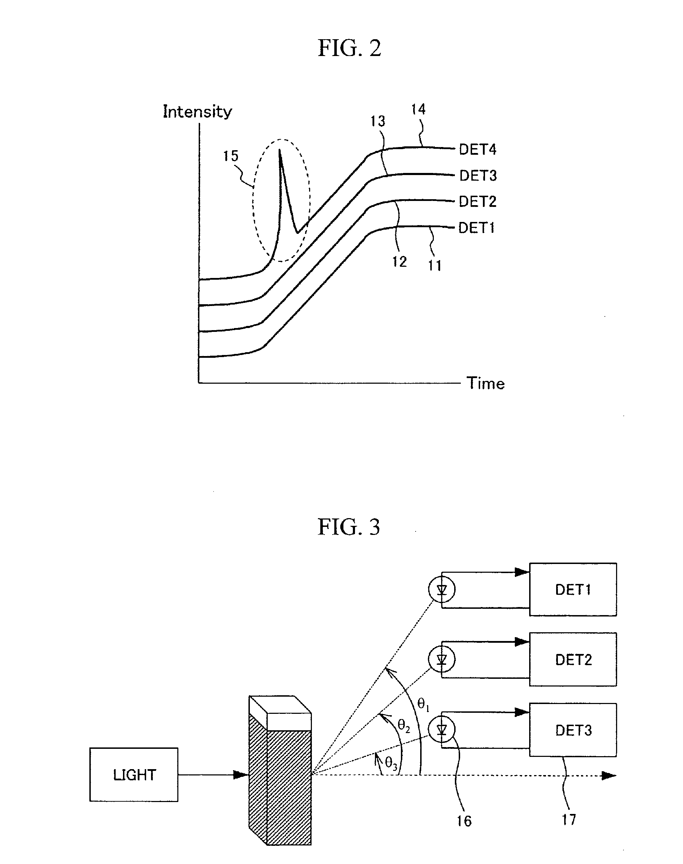

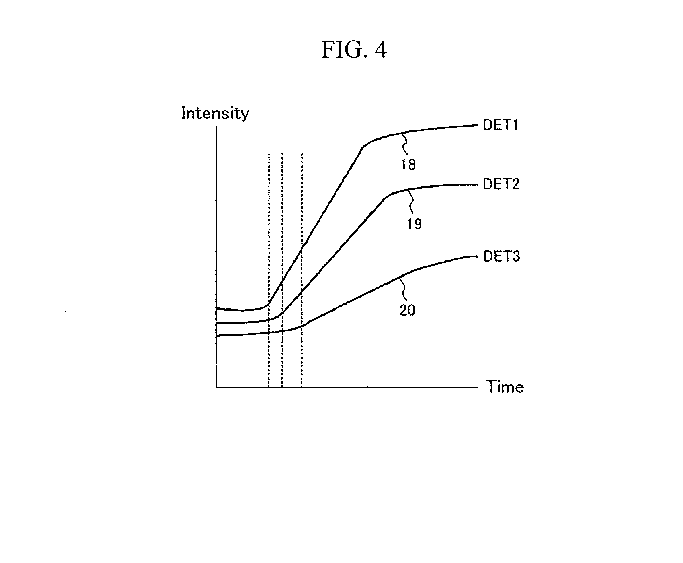

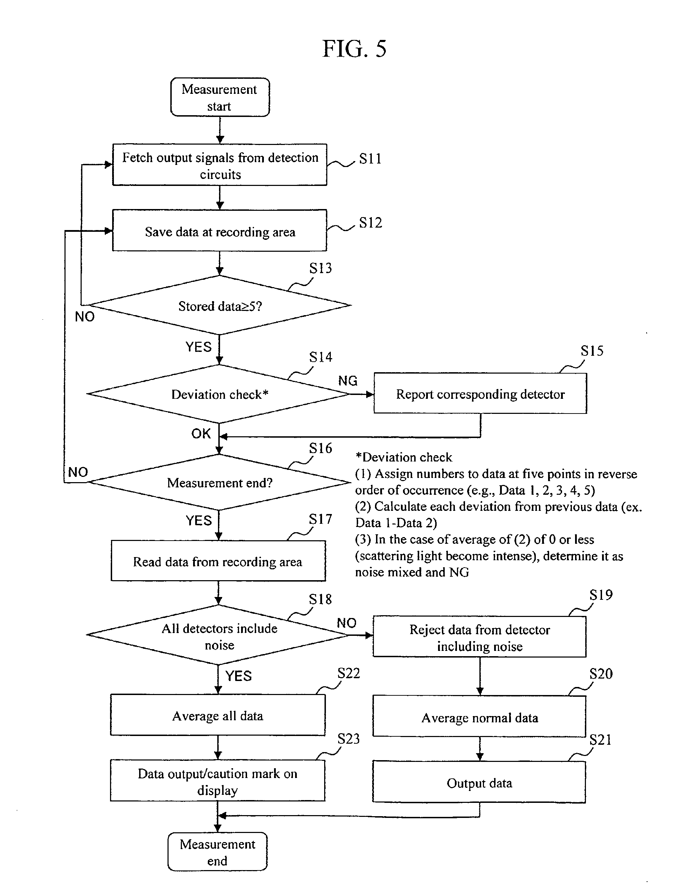

Fig. 1 schematically illustrates a part of an analysis device that is Embodiment 1 of the present invention, Fig. 2 schematically illustrates an exemplary output signal from detection circuits of Fig. 1, Fig. 3 schematically illustrates a part of an analysis device including a plurality of detectors disposed at different angles, Fig. 4 schematically illustrates an exemplary output signal from detection circuits of Fig. 3, and Fig. 5 is an operation flowchart of the analysis device that is Embodiment 1.

In Fig. 1, a light source 1 in an analysis device applies light to a measurement target. The measurement target is a reaction container 2 containing a measurement target body 3 therein. The measurement target includes at least one of a measurement target body such as a blood sample, a urine sample or other various samples and a reaction container containing a measurement target body.

Two or more detectors 5 disposed on a plane orthogonal to an optical axis 4 or on a circumference around the optical axis 4 measure the intensity of scattering light at the measurement target. The optical axis 4 preferably is incident on the measurement target orthogonally to the incident face of the measurement target. In this embodiment, four detectors 5 are disposed on the circumference around the optical axis 4 at regular intervals, and these four detectors 5 are set at the same inclination angle θ (e.g., 20°) with reference to the optical axis 4. The inclination angle may be selected from 0° to 30°. The detectors 5 and the light source 1 are disposed so as to sandwich the measurement target therebetween.

The light source 1 may be one that emits light similar to natural light such as a LED or a halogen lamp. For instance, a LED of single wavelength may be used for the light source 1. In order to avoid influences by hemoglobin or bilirubin contained in a blood sample, the single light source preferably has a wavelength from 600 to 1000 nm. As the detectors 5, photodiodes may be used. The light source 1 and the detectors 5 are set at the distance therebetween of about 30 mm.

A detection circuit part 6 converts the output from a corresponding detector 5 into voltage and amplifies the same. An operation part 7 converts the output from each detection circuit 6 into a digital value and stores the same in a recording part 8. A high-order controller 9 outputs a final measurement result on the basis of the stored data and displays the same on a display 10 to inform an operator of the result.

Referring to Fig. 5, a measurement example by this analysis device is described below.

After injecting a measurement target body 3 in the reaction container 2, measurement is started. Firstly, the intensity of scattering light from the measurement target body 3 is measured by the four detectors 5 disposed on the circumference around the optical axis 4 (S11). Outputs from the detectors are amplified by the detection circuit part 6, and are converted into digital values by the operation part 7 at constant intervals. The measurement result as the digital values is stored in the recording part 8 (S 12). When the number of the stored data reaches a predetermined number, e.g., five or more (S13), a determination is made as to whether there is noise or not in the measurement result due to a foreign substance such as a bubble on the basis of a deviation of each data (S14).

The following describes an exemplary determination method.

Firstly, numbers are assigned to the stored data in order of occurrence, and a deviation of each of the newest five data from the previous data and their average are calculated. Based on this average, presence or not of noise due to a foreign substance such as a bubble is determined.

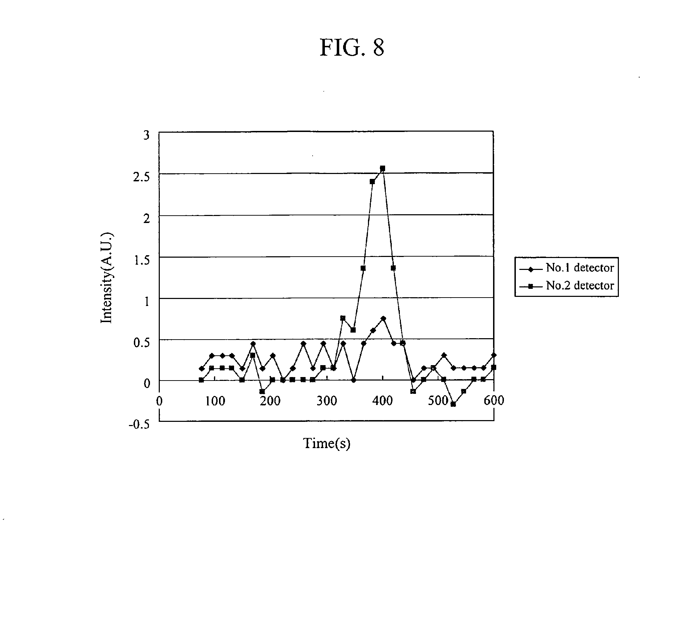

For instance, in the case of an agglutination reaction, if there is no influence by a foreign substance such as a bubble, the intensity of scattering light changes uniformly as in outputs 11 to 13 from the detectors of Fig. 2 so that the average of deviations becomes 0 or more, and they are determined as normal. On the other hand, when a foreign substance such as a bubble is mixed in the reaction container 2 or the measurement target body 3, noise 15 occurs as in a signal 14 from a detector of Fig. 2. Fig. 8 illustrates actually measured data from detectors disposed at two positions to detect 20° scattering light. While data from No.1 detector is normal, abnormal behavior is found in data from No.2 detector.

At this time, the average of the deviations around the noise becomes less than 0, and they are determined as abnormal. At this time, influences by noise of high-frequency or noise of small amplitude can be removed by reducing the number of data processed or bringing the determination criterion closer to 0. However, since noise due to other than a foreign substance such as a bubble also is removed, the number of data to be processed and the determination criterion may be changed depending on the measurement target.

When it is determined that there is noise due to a foreign substance such as a bubble, the high-order controller 9 is informed of the output of the detection circuit part that is determined as abnormal (S 15). This procedure is repeated until the measurement ends.

When it is determined as YES at Step 16 to end the measurement, the high-order controller 9 reads data of the outputs 11 to 14 from the detectors recorded in the recording part 8 (S 17). At this time, the output determined at the aforementioned procedure as including noise due to a foreign substance such as a bubble, e.g., the output 14 from a detector of Fig. 2 is rejected (S19), the remaining outputs 11 to 13 are averaged (S20), a result thereof is displayed on the display 10 (S21) and an operator is informed of the measurement result.

When it is determined at the aforementioned procedure that all of the outputs 11 to 14 include noise due to a foreign substance such as a bubble (YES at the determination of S18), all of the outputs are averaged (S22), a result thereof is displayed on the display 10 and an operator is informed of abnormal with a caution mark (S23).

The aforementioned measurement method can reduce influences by a foreign substance such as a bubble. Further, outputs from a plurality of detectors are averaged, whereby nonperiodic noise can be reduced and the S/N characteristics can be improved.

On the other hand, in the configuration as in Fig. 3 where a plurality of detectors 16 are disposed at different angles θ₁, θ₂, θ₃ with reference to the optical axis of light applied to a measurement target, data influenced by a foreign substance such as a bubble may be rejected, whereby such an influence can be reduced.

In the configuration as in Fig. 3 including the detectors disposed at different angles with reference to the optical axis, however, output signals from the detectors change differently over time as in Fig. 4. Therefore, an average of the outputs 18 and 19 from the detectors and an average of the outputs 19 and 20 from the detectors will not be the same result. That is, when the detectors are disposed at different angles as in Fig. 3, a different measurement result will be obtained depending on the detector that is rejected because of an influence by noise. Accordingly, the measurement results therefrom cannot be averaged, and therefore the S/N ratio characteristics cannot be improved.

Therefore in order to improve the S/N ratio characteristics, it is effective to dispose a plurality of detectors on a circumference around the optical axis 4 so that detectors are inclined in the same manner with reference to the optical axis.

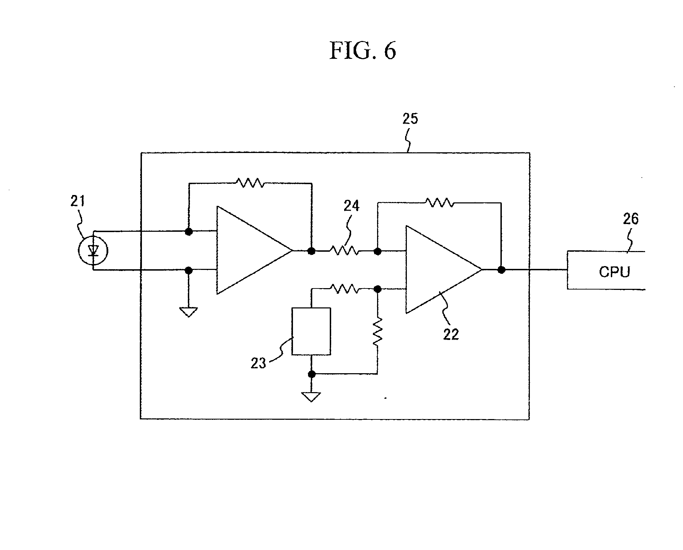

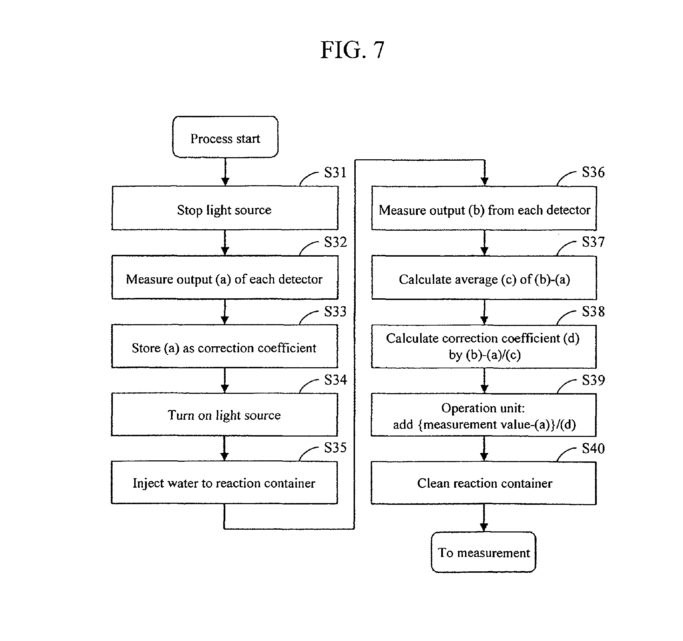

Referring to Fig. 6 and Fig. 7, Embodiment 2 of the present invention is described below.

Fig. 6 schematically illustrates a detection circuit part relating to Embodiment 2 of the present invention, and Fig. 7 is a flowchart of exemplary calculation of a correction coefficient.

In Fig. 6, when a photodiode is used as a detector 21, a detection circuit part 25 generates a specific offset error independent of the intensity of scattering light on the basis of dark current thereof, bias current and offset voltage of an operational amplifier 22 of the detection circuit part 25.

Further since a circuit element 24 of the detection circuit part 25 also has allowable tolerance, the detection circuit further produces an error of gain depending on the intensity of scattering light. Therefore when a detection circuit part determined as including noise is rejected and outputs from the remaining detection circuits are averaged so as to reduce the influence by bubbles or the like as in Embodiment 1, an absolute value thereof will generate an error depending on the position or the number of the detectors rejected, which degrades the repeatability.

Then, as illustrated in Fig. 7, prior to the start of measurement, correction coefficients of each detector and each detection circuit part are calculated. Operation is performed to a measurement result using such correction coefficients, whereby errors of each of the detectors and detection circuit parts can be reduced for improved repeatability.

Referring to Fig. 7, the following describes an exemplary calculation method of the correction coefficients.

Firstly, light-emission from a light source 11 is stopped (S31), output (a) from each detector is measured based on dark current of the photodiode 21, bias current and offset voltage of the operational amplifier 22 (S32), and the output (a) is stored as a correction coefficient of the detector (S33). The correction coefficient (a) is used for correction of the offset error due to the dark current of the photodiode, the bias current and the offset voltage of the operational amplifier 22. Alternatively voltage of a reference voltage generation circuit 23 of the detection circuit part 25 may be changed in accordance with the correction coefficient to correct the offset error.

After deciding the correction coefficient (a), the light source is turned on (S34), liquid for output adjustment such as water is injected to a reaction container (S35), and output (b) from each detector is measured (S36). Then an average (c) of differences between the outputs (b) from the detection circuits and the correction coefficient (a) is calculated by the operation part 25 (S37). Further a correction coefficient (d) is calculated by the operation part 25 for each detector using a ratio of the difference between the output (b) of each detector and the correction coefficient (a) to the average (c) (S38). The correction coefficient (d) is used for correction of an error of the gain due to the circuit element 24 of the detection circuit part 25.

An operation part 26 additionally performs operation to use the correction coefficients (a) and (d) to calculate a difference from the correction coefficient (a) for the following measurement results and divide the result thereof with the correction coefficient (d) (S39). When offset correction is performed while changing the voltage of the reference voltage generation circuit 23, the processing by the operation part to calculate a difference from the correction coefficient (a) for the measurement results is not performed. Thereafter, the reaction container is cleaned (S40) to start the measurement.

As stated above, operation is performed to the measurement results using the correction coefficients, whereby influences by a foreign substance such as a bubble can be reduced and the S/N ratio characteristics can be improved, and an error specific to each detector and detection circuit part can be reduced for improved repeatability of the measurement results.

The following describes other embodiments without reference to drawings.

One detector and a plurality of (four) light sources are disposed so as to sandwich a measurement target therebetween. The plurality of (four) light sources are disposed on a circumference around a line passing through the measurement target and the detector. The plurality of (four) light sources are disposed at regular intervals. The measurement target has a light-source face facing the light sources and a detection face facing the detector where the light-source face and the detection face are in parallel.

The line passing through the measurement target and the detector intersects orthogonally with the light-source face and the detection face of the measurement target. Therefore the plurality of (four) light sources disposed on the circumference around the line passing through the measurement target and the detector are disposed at the same inclination angle with reference to the passing line. The inclination angle may be about 20°. The one detector has a light-receptive face orthogonal to the passing line. Therefore, the detector can measure scattering light generated from the measurement target irradiated with the light from the light sources. The light sources used may be LEDs, and the detector used may be a photodiode.

The plurality of (four) light sources are configured to blink one by one. The blinking is repeated one by one so that the blinking rotary-moves, whereby the one detector can measure the intensity of scattering light illustrated in Fig. 2.

That is, in the case of blood coagulation, the intensity change of scattering light as illustrated in Fig. 2 is in about 60 seconds from change start to change end. During the passage of this time including before the change start and after the change end, the blinking is repeated at high speed, and the detection outputs from the detector in synchronization with the blinking are collected on a time-series basis for each of the light sources, whereby measurement approximating the intensity measurement of scattering light illustrated in Fig. 2 is enabled.

This analysis and measurement method includes one detector and one detection circuit, whereby the configuration can be simplified.

### DESCRIPTION OF REFERENCE NUMBERS

- 1:: Light source
- 2:: Reaction container
- 3:: Measurement target body
- 4:: Optical axis of light applied from light source to measurement target
- 5:: Detectors disposed on a circumference around optical axis
- 6:: Detection circuit part 1
- 7:: Operation part 1
- 8:: Recording part
- 9:: High-order controller
- 10:: Display
- 11:: Output example from detector DET 1 of Fig. 1
- 12:: Output example from detector DET 2 of Fig. 1
- 13:: Output example from detector DET 3 of Fig. 1
- 14:: Output example from detector DET 4 of Fig. 1
- 15:: Noise due to foreign substance such as bubble
- 16:: Detectors disposed at different angles with reference to optical axis
- 17:: Detection circuit part 2
- 18:: Output example from detector DET 1 of Fig. 2
- 19:: Output example from detector DET 2 of Fig. 2
- 20:: Output example from detector DET 3 of Fig. 2
- 21:: Detector (photodiode)
- 22:: Operational amplifier
- 23:: Reference voltage generation circuit
- 24:: Circuit element
- 25:: Detection circuit part 3
- 26:: Operation part 3

## Claims

1. An analysis device configured to measure, with a detector, scattering light scattered from a measurement target irradiated with light,
wherein
at least two detectors are disposed on a plane orthogonal to an optical axis of the light applied to the measurement target and on a circumference around the optical axis.

2. An analysis device, comprising: a reaction container storing a measurement target body; a light source part from which light is applied to the reaction container; a detector to measure scattering intensity of light scattered at the measurement target body; a detection circuit part to measure an output from the detector; an operation part to process an output from the detection circuit part and a recording part to store an output from the detection circuit part,
wherein
two or more detectors are disposed on a plane orthogonal to an optical axis of light applied from the light source part to the reaction container and on a circumference around the optical axis.

3. The analysis device according to claim 1 or 2, wherein a detector to be used for measurement is selected from the detectors disposed on the circumference.

4. The analysis device according to claim 1 or 2, wherein the operation part averages outputs from the detectors disposed on the circumference.

5. The analysis device according to claim 1 or 2, wherein the detection circuit part or the operation part corrects outputs from the detectors disposed on the circumference.

6. An analysis device configured to measure, with a detector, scattering light scattered from a measurement target irradiated with light,
wherein
at least two detectors are disposed on a plane orthogonal to an optical axis of the light passing through the measurement target and on a circumference around the optical axis.

7. The analysis device according to any one of claims 1, 2 and 6,
wherein
an output from a detector whose output is determined as abnormal is rejected.

8. The analysis device according to claim 7,
wherein
outputs from remaining detectors not rejected are processed for averaging.

9. An analysis device configured to measure, with a detector, scattering light scattered from a measurement target irradiated with light,
wherein
blinking of light on a circumference around a line passing through the measurement target and the detector is performed on an opposite side of the detector with reference to the measurement target, and the blinking is repeated one by one so that the blinking rotary-moves during measurement of the measurement target.
